Europäisches Patentamt

European Patent Office

Office européen des brevets

(11) Publication number: **0 286 894**
**A2**

# EUROPEAN PATENT APPLICATION

(21) Application number: **88104942.3**

(22) Date of filing: **28.03.88**

(51) Int. Cl.⁴ **H04J 15/00**

(30) Priority: **13.04.87 US 37877**

(43) Date of publication of application:
**19.10.88 Bulletin 88/42**

(84) Designated Contracting States:
**DE FR IT NL SE**

(71) Applicant: **KOLLMORGEN CORPORATION**
**10 Mill Pond Lane**
**Simsbury, CT 06070(US)**

(72) Inventor: **Park, Eric D.**
**P.O. Box 894 Rt. 3**
**Blacksburg, VA 24060(US)**
Inventor: **Gat, Erann**
**202 Washington Street S.W.**
**Blacksburg, VA 24060(US)**

(74) Representative: **Königseder, geb. Egerer,**
**Claudia**
**Zugspitzstrasse 65**
**D-8104 Grainau(DE)**

(54) Optical multiplexing system and method.

㊼ A system and method is provided for wavelength multiplexing optical signals in a multiple channel fiber optic sensor. Light from a broad band source is transmitted through a single fiber optic source link to a source optical splitter, where the light is divided among a plurality of source channel fibers corresponding to each information channel of the transducer. Light from the source channel fibers is modulated by the transducer information channels and is encoded by a first set of narrow band interference filters. Modulated, encoded light from each channel is transmitted by a return channel fiber to an optical mixer, where the modulated encoded light from all channels is combined into a single return fiber optic link. A return optical splitter divides the combined. modulated encoded light among a plurality of dedector fibers. Light from the detector fibers is decoded by a second set of interference filters corresponding to the first set of interference filters so that each detector receives and detects light modulated by one transducer information channel.

FIG. 1

## OPTICAL MULTIPLEXING SYSTEM AND METHOD

The invention relates to optical wavelength multiplexing useful in fiber optic sensor applications. Fiber optic sensors generally include a light source, a forward optical fiber link, a transducer, a return optical fiber link and a detector. In such a sensor, the forward optical fiber link transmits light from the light source to the transducer, which modulates the light in some manner indicative of the parameter of interest. The return optical fiber link transmits the modulated light to a detector, which generates an electrical signal corresponding to detection of the modulated light. The detector signal, either in its raw form of after further processing in a known manner, becomes the output of the sensor indicating the parameter of interest.

A wide variety of transducers is available, both in terms of physical parameters which can be measured and the optical parameters which can be modulated. It is often necessary, however, to use multiple transducers or a single multiple-channel transducer in order to develop sufficiently detailed information to determine and/or monitor a given parameter of interest. By way of example, an absolute linear encoder may involve a multiple-channel digital scale and the resolution of the system is directly related to the number of information channels. Where high resolution is required, a large number of transducer channels may be necessary.

In a traditional, non-multiplexed system multiple channels each require independent fiber optic links. However, countervailing considerations often militate against the use of independent fiber optic links dedicated to each channel. These considerations include the high cost of fiber optic links and the increase in fiber failure rate which necessarily accompanies an increase in the number of fibers in a given sensor system. Moreover, some sensor applications, such as in military aircraft, are accompanied by strict space and weight con siderations.

Therefore, a need has arisen for a multiple-channel fiber optic sensor system in which the information from a large number of transducers or transducer channels can conveniently, reliably and economically be multiplexed through a single return fiber. Of course, the signal from each transducer or transducer channel must also be separately identifiable from the combined return signal for detection. This perceived need for optical multiplexing has proven highly problematic to the fiber optic sensor industry.

One prior art proposal for an optical multiplexing system involves using time-delay coils consisting of optical fibers of various lengths. In this proposed system, each information channel is provided with a delay coil so that a time delay corresponding to the time required for each channel signal to travel through the corresponding delay coil is introduced into the channel signals before those channel signals are combined into a single return fiber optic link. In this manner, the combined channel signals are time staggered. The time staggered signals are then sequentially detected using a synchronized detector arrangement capable of recognizing each time delayed signal. This time delay system has numerous drawbacks.

First, each of the delay coils must be relatively large in order to introduce an appreciable time delay into each channel signal. However, large coils contradict the goal of reducing sensor size, weight and cost.

Secondly, fiber optic delay coils suffer from optical energy losses due to the phenomenon known as microbending, which is exaggerated by winding an optical fiber into a coil. In addition to signal attenuation problems, microbending limits how tightly the fibers can be coiled, further increasing the size of the system.

Thirdly, as the number of transducers or channels in the system is increased, so must the number and size of the delay coils, too.

Finally, the detector must be synchronized to recognize which time-delayed signal corresponds to each transducer or transducer channel. It is believed that these drawbacks far exceed any corresponding advantages of time delay multiplexing and, therefore, time delay multiplexing has been found to be commercially unattractive.

Another approach to optical multiplexing which has been suggested is to separate white light from a broadband source into various colors using a grating or prism, pick up the individual colors with separate source fibers, modulate the light from each of the source fibers and combine the modulated multicolor light into a single return fiber. The modulated multicolor beam from the return fiber is then directed at another grating or prism to, again, separate the individual channels of light. Detectors are disposed in the path of the separate beams of light to separately detect the modulated signals from the various transducer information channels. Unfortunately, this proposal requires that the fibers, grating/prism and detectors all be kept in close alignment. Needless to say, this proposed system is not commercially practical due to alignment variations introduced by vibration and thermal expansion/contraction effects experienced in environments where fiber optic sensors are commonly used. In addition, gratings and/or prisms add weight and bulk to the system.

It is an object of the invention to provide an optical wavelength multiplexing system which permits multiple optical signals to be transmitted through a single optical fiber and yet be separately recognizable for detection.

It is a further object of the invention to provide an optical multiplexing system which does not involve the use of delay coils, gratings or prisms.

It is another object of the invention to provide, in a multiple channel fiber optic sensor, a method of multiplexing optical signals from multiple sensor information channels through a single optical fiber in a manner which permits each channel signal to subsequently be identified and separately detected.

A still further object of the invention is to provide a system and method for multiplexing optical sensor signals which is reliable under a wide variety of environmental conditions, including vibration and temperature variations.

It is yet another object of the invention to provide, in a fiber optic sensor, an optical multiplexing system and method which permits multiple sensor channel signals to be multiplexed through a single optical fiber without adding appreciable size, weight or cost to the sensor. The optical multiplexing system and method of the invention advantageously provides reliable optical signal multiplexing. In addition, the optical multiplexing system and method of the invention os particularly useful in multiple channel fiber optic sensors.

Remarkably, the optical multiplexing system and method according to the invention does not add any appreciable size, weight or cost to a multiple channel fiber optic sensor. As yet a further advantage, the optical multiplexing system and method of the invention does not involve fiber optic delay coils, gratings or prisms.

In accordance with the invention, an optical multiplexing system and method is provided in which light corresponding to each information channel of a multiple channel fiber optic sensor is wavelength encoded so that the encoded, modulated light may be transmitted through a single return fiber optic link from the modulating zone, i.e., the sensing zone, to a detecting zone. Remarkably, however, the multiplexed signal from each information channel can conveniently be decoded for separate detection.

There is claimed an optical multiplexing system com prising a light source; transducer means having multiple channels of information for modulating light; source fiber optic means for receiving light from said light source and transmitting said light to said transducer means; a first set of interference filters having one interference filter corresponding to each information channel of said transducer means for encoding light corresponding to each transducer means information channel; return fiber optic means for receiving modulated light from said transducer means; a second set of interference filters corresponding to said first set of interference filters for decoding modulated light transmitted from said transducer means by said return fiber optic means; and detector means for separately detecting modulated light from each information channel of said transducer means after said modulated light has been decoded by said second set of interference filters.

In the preferred embodiment of the invention, light, which may or may not be within the visible spectrum, from a broadband light source is coupled into a source fiber optic link. The light is transmitted to a source optical splitter which divides the light among a number of source channel fibers, one source channel fiber corresponding to each information channel of the modulator, i.e., each channel of a multiple channel tranducer or each transducer of a multiple transducer system.

Light from each source channel fiber is modulated by one information channel and the modulated light from each channel is encoded by a corresponding filter of a first set of interference filters. The modulated, encoded light from all of the information channels is combined by an optical mixer into a single return fiber optic link. The combined modulated encoded light from all information channels is transmitted by the return fiber optic link to a return optical splitter. The return optical splitter divides the modulated encoded light among a plurality of detector channel fibers equal in number to the number of information channels and, hence, also equal to the number of filters in the first set of interference filters. Modulated encoded light from each detector channel fiber passes through and is decoded by one of a second set of interference filters corresponding to the first set of filters, so that decoded modulated light corresponding to one information channel is transmitted to each detector.

In this manner, each detector in a set of detectors receives and detects only light modulated by one information channel. The detector signals are fed to an electronic module for further processing, display or system control in a known manner.

Preferably, light from the light source is coupled into the source fiber optic link by a cylindrical graded index lens ("GRIN" lens) or by a cylindrical GRIN lens in combination with a plano-convex GRIN lens. This arrangement is desirable to maximize the mount of light entering the system in order to compensate for optical energy losses due to other system elements, e.g., the interference filters, optical splitters and the transducer. In addition, it is also contemplated that light from each source channel fiber may be collimated by a cylindrical GRIN lens so that a collimated beam passes through the interference filter and is modulated by the appropriate transducer information channel. In this configuration, a second cylindrical GRIN lens preferably couples the encoded, modulated light into the appropriate return fiber. This configuration is particularly useful in a transmissive modulation system since it facilitates alignment of the source and return light beams. Indeed, a collimated beam system is much easier to align than a non-collimated system, particularly where non-visible light is involved. Of course, this collimated beam technique may also prove useful in reflective systems.

Thus, it will be appreciated that the invention pro vides convenient wavelength multiplexing which permits optical signals from a plurality of transducer information channels and, more particularly, digital optical signals from a multiple channel fiber optic sensor transducer, to be combined and transmitted to a remote detector location.

Fig. 1 is a partial schematic diagram of a fiber optic sensor which embodies the optical multiplexing system and method according to the invention.

Fig. 2 is a partial schematic diagram of a collimated beam modulation configuration in accordance with the invention.

The optical multiplexing system 1 comprises a light source 12 which emits light for coupling into a source fiber optic link 14. A source optical splitter 16 divides the light from source fiber link 14 among source channel fibers 18 and a multiple channel transducer 20 modulates the light received from source fibers 18.

A first set of interference filters 22 encodes modulated light from each transducer channel 20 and the encoded modulated light from the transducer channels is coupled into return channel fibers 24. An optical mixer 26 combines the encoded modulated light from all return fibers 24 into a single return fiber optic link 28. A return optical splitter 30 divides the return beam among detector channel fibers 32 and a second set of interference filters 34 decodes the modulated transducer channel signals for detection by a set of detectors 36. An electronic module 38 receives all detector signals for display and/or further processing.

More specifically, light source 12 is a broadband light source and may consist of a single white light source, such as a high intensity halogen bulb, or a combination of narrower bandwidth sources. As used herein, the term "light" is not intended to be restrictive and, in particular, is not limited to optical energy within the visual spectrum. All that is required is that the source emanates optical energy useful in fiber optic sensor applications. In fact, near infrared and infrared radiation are known to be useful in many sensor applications.

Light from light source 12 is coupled into source fiber link 14, preferably using a cylindrical graded index lens 40, commonly referred to as a "GRIN" lens, or a GRIN lens in combination with plano-convex GRIN lens 42. Naturally, the object is to maximize the amount of light from light source 12 in order to compensate for optical energy losses experienced elsewhere throughout the system; most notably at the optical splitters, the transducer and the two sets of interference filters.

Source fiber link 14 transmits the light from light source 12 to a source optical splitter 16, which divides the light among source channel fibers 18 equal in number to the number of transducer channels. By way of example, source optical splitter 16 may simply consist of a 1:N fused fiber optic coupling, where N equals the number of transducer channels and, hence, the number of source channel fibers.

Light emanating from each source channel fiber 18 is projected onto and is modulated by one channel of the multiple channel transducer 20 or, where applicable, each transducer of a multiple transducer system. For clarity, transducer 20 is shown in the drawings as a ten channel transmissive transducer. It is contemplated, however, that either a reflective transducer or a greater or lesser number of information channels may also be used without departing from the principles of the invention.

Each channel of transducer 20 modulates light received from only one source channel fiber. Bay way of example only, the transducer channels may consist of a series of transmissive and opaque regions or, in a reflective system, reflective and non-reflective surface portions.

It will be appreciated that a digital code can be gene rated using multiple channels of transmissive/opaque or reflective/non-reflective regions.

Advantageously, a pattern of transmissive and opaque regions can be accurately and inexpensively generated on lithographic film using known photographic techniques. Such a digital transducer may, for example, be mounted on the shaft of an electric motor to indicate absolute rotor position. Of course, since the resolution of such a digital system increases as the number of information channels is increased, it may be necessary to provide many information channels in order to resolve the necessary position information.

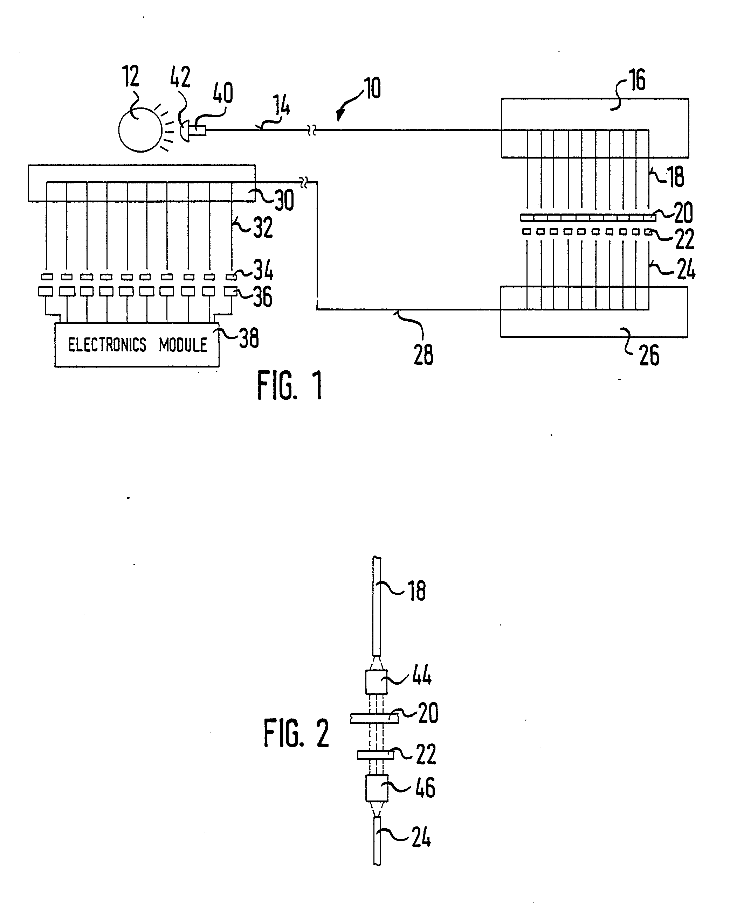

Light modulated by each channel of transducer 20 passes through and is encoded by one of a first set of interference filters 22. Preferably, each filter of the first set of interference filters is a narrow band filter centered at a different wavelength of light. By way of example only, the first set of interference filters may be selected to transmit only a narrow 10 nanometer band of light. It should also be appreciated that although the first set of interference filters 22 (Fig. 1) is shown disposed between the transducer channels and the return fibers. it is also contemplated that the first set of interference filters could be disposed between source channel fibers 18 and transducer 20. It is also preferred that physically adjacent filters transmit dissimilar wavebands of light. For example, a filter which transmits wavelengths of light in the infrared or near infrared portion of the spectrum could be disposed between blue and green filters corresponding to other information channels. In this manner, noise from adjacent channels can be minimized.

The modulated light from each channel of transducer 20, as encoded by the corresponding narrow waveband interference filter, is coupled into one of the return channel fibers 24. Thereafter, the return channels are combined by an optical mixer 26 into a single return fiber optic link 28. Optical mixer 26 may consist of an N:1 fused fiber optic coupling, where N equals the number of return channel fibers and, hence, also the number of transducer information channels. For the ten channel system of Fig. 1, a 10:1 fused optical coupling would be indicated.

Thereafter, return fiber optic link 28 transmits a combined optical signal consisting of wavelength encoded light corresponding to each information channel of transducer 20. Light from return fiber optic link 28 is divided by a return optical splitter 30 into a plurality of detector channel fibers 32 equal in number to return channel fibers 24. As in the case of the source optical splitter 16, the return optical splitter 30 may consist of a 1:N fused fiber optic coupling where N equals the number of detector channel fibers 32, i.e., the number of return channel fibers, which also equals the number of transducer channels. Light from each detector channel fiber passes through one interference filter in the second set of interference filters 34 and is detected by one of the series of detectors 36. Since the second set of interference filters 34 correspondonds to the first set of filters 22 which originally encoded the modulated light from each transducer channel, each detector receives and detects only light modulated by one of the information channels of transducer 20. As in the case of the first set of interference filters, each filter of the second set is preferably disposed between two other filters which transmit light from dissimilar portions of the spectrum. Electronics module 38 receives the detector electrical signals for display, further processing and/or use in system control. It is also contemplated that a GRIN lens may be used to focus light from the detector fiber onto the detector.

As shown in Fig. 2, it is preferred that appropriate cylindrical GRIN lenses be disposed at the emitting tip of each source channel fiber 18 and at the receiving tip of each return channel fiber 24. Preferably, the pitch of the source fiber GRIN lenses 44 is selected so that the light beam emanating from each source channel fiber 18 and directed toward transducer 20 is a collimated beam. The pitch of the receiving GRIN lenses 46 associated with the return channel fibers 24 should be selected so that the collimated beam received from the source GRIN lens 44 via transducer 20 is properly coupled into return channel fiber 24. This arrangement facilitates alignment of the source and return fibers, particularly in a transmissive system such as shown in Fig. 1 and 2. Such a collimated beam arrangement is desirable in both transmissive and reflective sensor systems, however, since a larger target area of each transducer channel is sampled, thereby reducing error based on imperfections in the transducer channel itself.

As shown in Fig. 2, the first set of interference filters 22 could be disposed in the path of the collimated, modulated light beam. Alternatively, the first set of interference filters 22 could be disposed in the path of collimated beam from source GRIN lens 44 prior to modulation or either between source channel fiber 18 and source GRIN lens 44 or between return channel fiber 24 and return GRIN lens 46. Finally, it is contemplated that the filters could be formed on a surface of the GRIN lenses.

As the resolution of a digitally encoded transducer is increased by increasing the number of information channels, the number of opaque/transmissive or reflective/non-reflective pairs is also increased. Consequently, the surface area of the opaque and transmissive areas decreases. It is foreseen that the size of the opaque/transmissive or reflective/non-reflective surface areas may decrease to a point where the beam of source illumination overlaps more than one surface area. That is, the effective aperture of the light beam from source fiber 18 illuminates overlapping surface areas, such as by illuminating both transmissive and opaque regions simultaneously. Needless to say, illumination of overlapping target areas will not produce useful readings.

One contemplated solution ot this problem is to provide a mask or grating disposed between the source channel fiber 18 and transducer 20. The aperture of the mask is calibrated so that the effective illumination aperture of light incident on the transducer does not exceed the target area of the transducer channel 20. The optical multiplexing system is used in accordance with the multiplexing method of the invention in the following manner.

Light source 12 is activated to emit light, which is coupled into source fiber optic link 14 by planoconvex GRIN lens 42 and cylindrical GRIN lens 40.

The light is transmitted by source fiber optic link 14 to source optical splitter 16, where it is divided among a plurality of source channel fibers 18, one for each transducer channel. Light emanating from source channel fibers 18, preferably through source GRIN lenses 44, is incident upon the information channels of transducer 20, which modulates the light in a manner indicative of the parameter of interest. The modulated light from transducer 20 is wavelength encoded by the first set of optical filters 22 so that later the modulated light from each channel may be separately identified for detection. The modulated, encoded light from the transducer channels is coupled into return fibers 24 and combined by optical mixer 26 into the single return fiber link 28. Rerurn fiber link 28 transmits the combined modulated, encoded optical signals to return optical splitter 30, where the modulated encoded light is divided among the plurality of detector channel fibers 32. The second set of interference filters 34 corresponding to the first set of interference filters decodes the modulated light for detection by detectors 36.

Since the second set of filters corresponds to the first set of filters, each detector receives and detects only light modulated by one information channel of transducer 20.

## Claims

1. An optical multiplexing system (10) comprising a light source (12); transducer means (20) having multiple channels of information for modulating light; source fiber optic means (14,16,18) for receiving light from said light source (12) and transmitting said light to said transducer means (20); a first set of interference filters (22) having one interference filter corresponding to each information channel of said transducer means (20) for encoding light corresponding to each· transducer means information channel; return fiber optic means (24,26,28) for receiving modulated light from said transducer means (20); a second set of interference filters (34) corresponding to said first set of interference filters (22) for decoding modulated light transmitted from said transducer means (20) by said return fiber optic means; and detector means (36) for separately detecting modulated light from each information channel of said transducer means (20) after said modulated light has been decoded by said second set of interference filters (34).

2. The system of claim 1, characterized in that said light source (12) is a broadband light source.

3. The system of claim 1, characterized in that said first set of interference filters (22) is a set of narrow band filters, each of said narrow band filters being disposed in the optical path of one of said transducer means information channels.

4. The system of claim 3, characterized in that each of said narrow band filters of said first set of filters (22) receives modulated light from one of said transducer means information channels and transmits modulated encoded light to said return fiber optic means.

5. The system of claim 3 wherein said return fiber optic means further comprises a plurality of return channel fibers (24) each corresponding to one of said transducer means information channels, said return channel fibers (24) being coupled by an optical mixer (26) into a single return fiber optic link (28).

6. The system of claim 5, characterized in that said optical mixer (26) further comprises a fused fiber optic coupling.

7. The system of claim 5, characterized in that said return fiber optic link (28) is divided by a return optical splitter (30) into a plurality of detector channel fibers (32) equal in number to said transducer means information channels.

8. The system of claim 7, characterized in that said return optical splitter (30) further comprises a fused fiber optic coupling.

9. The system of claim 7, characterized in that said second set of interference filters (34) is a set of narrow band filters corresponding to said first set of interference filters (22), each of said second set of interference filters (34) being disposed in the optical path of one of said detector channel fibers (32) to decode light therefrom and transmit decoded, modulated light to said detector means (36).

10. The system of claim 9, characterized in that said detector means (36) comprise a set of photoelectric detectors, one of said photoelectric detectors receiving and detecting decoded modulated light from one filter of said second set of interference filters (34).

11. The system of claim 3, characterized in that said source fiber optic means further comprise a single source fiber optic link (14) configured and dimensioned to receive said light, whereafter said single source fiber optic link (14) is divided by a source optical splitter (16) into a set of channel source fibers (18), each of said fibers (18) corresponding to one information channel of said transducer means (20).

12. The system of claim 11, characterized in that said source optical splitter (16) further comprises a fused fiber optic coupling.

13. The system of claim 12, characterized in that each of said narrow band filters of said first set of filters (22) receives light from one of said channel source fibers (18) and transmits encoded light to one of said transducer means information channels.

14. A method of multiplexing modulated light in a multiple channel optical system (10) comprising the steps of emitting light from a light source (12); transmitting said light from said light source (12) to a modulating zone; modulating said light at said modulating zone using transducing means (20) having multiple information channels; encoding said modulated light by passing it through a first set of interference filters (22), one of said first set of interference filters corresponding to each of said multiple information channels: transmitting said encoded, modulated light from said modulating zone to a detecting zone; decoding said encoded modulated light by passing it through a second set of interference filters (34) corresponding to said first set of interference filters (22); and detecting said decoded modulated light from each channel of said transducer means (20).

15. The method of claim 14, characterized in that said encoded modulated light from each said information channel is received by a dedicated channel return optical fiber (24) and transmitted through an optical mixer (26) to a single fiber optic return link (28), said single fiber optic return link (28) transmitting said encoded modulated light to said detecting zone.

16. The method of claim 15, characterized in that said optical mixer (26) is a fused fiber optic coupling.

17. The method of claim 15, characterized in that said single fiber optic return link (28) is divided by a return optical splitter (30) into a plurality of detector channel optical fibers (32) equal in number to said information channels.

18. The method of claim 17, characterized in that said return optical splitter (30) comprises a fused fiber optic coupling.

19. The method of claim 17, characterized in that said encoded modulated light from each of said detector channel fibers (32) passes through and is decoded by one filter in said second set of interference filters (34).

20. The method of claim 19, characterized in that said decoded modulated light from each filter of said second set of interference filters (34) is detected by a dedicated photodetector (36).

FIG. 1

ELECTRONICS MODULE

FIG. 2